# EUROPEAN PATENT APPLICATION

(11) **EP 1 207 041 A1**
(43) Date of publication of application: **22.05.2002**
(21) Application number: 01402239.6
(22) Date of filing: 28.08.2001
(51) Int. Cl.: B32B 27/12, B32B 7/12, B32B 27/14, B65D 75/00, B65D 81/03, B65B 31/02

(54) **Material and method for protecting articles**

(30) Priority: 20.11.2000 US 716541
(71) Applicant: Transhield AS, 0581 Oslo (NO)
(72) Inventor: Todt, Gregory L., Union, Mighigan 49130 (US); Glick, James A., Granger, Illinois 46530 (US)
(74) Representative: Somnier, Jean-Louis

(57) **Abstract**

Packaging for a product comprising a first layer of a flexible, shrinkable film (12) and a second layer of a nonwoven fabric (14) secured to said film (12) for engaging the product and maintaining the film away from the product, said film (12) being responsive to heat to shrink into a rigid shell substantially conforming to the shape of the product, said nonwoven fabric (14) supporting the shell off of the product during and after shrinking of the film (12) and absorbing impact forces applied to the shell to thereby protect the product from said impact forces.

## Description

This invention relates to a packaging material and methods of packaging and protecting product by using the packaging material.

Reference is made to my prior United States Patent 5,491,017, which discloses a material and method for protecting large articles.

Precision products which are sensitive to environmental contaminants and corrosion have become increasingly common. These products must be protected during transportation (most damage to products occurs during transport) and storage from not only environmental contaminants and corrosion but also must be protected during handling against impact forces. However, the packaging materials must not affect the product in any way, and certainly cannot mark or abrade the product both while the product is stored and handled and during removal of the packaging from the product when the product is to be used. Film is a common packaging material, but most films are extremely abrasive and can easily damage the surface of an article if the film is moved relative to the surface at any time. It is also necessary that the packaging not substantially increase the volume of the product, so that storage space may be conserved.

One example of products which are difficult to protect from damage are military products such as artillery shells, rifles, etc., by way of non-limiting example. These products obviously are commonly stored for long periods of time before use and are especially susceptible to corrosion. Furthermore, many military products are affected by surface scratching and other damage during handling and are desirably protected against such damage. Still further, any packaging must not increase substantially the overall size of the product, since storage in crowded military facilities is generally limited.

Many other types of products pose the same type of packaging considerations posed by military products. For example, precision machine parts, especially repair parts, are often stored for long periods of time and stored in corrosive environments. For example, such parts sometimes must be stored where they are subjected to salt spray, such as on ships, oil drilling platforms, etc. Aerospace products also tend to be sensitive and must be protected accordingly.

Automobiles, vans, boats, etc. often must be transported to the customer on open trucks where they are exposed to the elements. Customers expect that new vehicles be in pristine condition when they are delivered and will not tolerate flaws in the paint or finish. One way to protect such articles is disclosed in U.S. Patent 5,712,008, which discloses a shrinkable, stretchable fabric in which a nonwoven inner layer separates a film outer layer from the surface of the article, thereby permitting the surface of the article to be protected from the film as the film moves relative to the surface of the article.

According to the present invention, a packaging material includes a shrinkable film which, when shrunk, hardens into a rigid shell, and a nonwoven fabric intermittently bonded to the shrinkable film. The shell is sufficiently rigid so as to be shape retaining and self supporting, even when removed from the article. Since the film forms a rigid shell and the shell is held away from the surface of the product by the compacted nonwoven fabric, the surface of the article is protected during transport and storage. During the shrinking phase, portions of the nonwoven fabric between the intermittent bonds release from the shrink film and become compacted or bunched. To apply the packaging material, the material is formed into a bag which loosely conforms to the product. The product is placed in the bag or the bag is placed over the product, and the bag is then shrunk until it conforms to the contours of the product. The shrinkable film is held away from the product by the nonwoven, thereby protecting the product from marking or abrasion by the film. Since the film shrinks until the nonwoven is compacted, it closely conforms to the product and is held off of the product a small distance by the nonwoven, so that the packaging increases the overall envelope of the product only slightly. The film hardens into a rigid shell, thus protecting the product. The nonwoven absorbs shocks due to impact forces applied to the shell, but the film also has a sufficiently low coefficient of friction that impact forces are deflected as compared to being transferred to the product. Accordingly, most of the impact force of blows applied to the product merely glance off of the film. The nonwoven fabric acts as a dampener, permitting the film to move slightly with respect to the product and the nonwoven fabric as the impact force glances off of the film.
Figure I is a schematic illustration of the manner in which the packaging material of the present invention is manufactured;
Figure 2 is a cross sectional view taken through the packaging material of the present invention before the material is shrunk around the product;
Figure 3 is a cross sectional view similar to Figure 2 but illustrating the packaging material after shrinking;
Figure 4 is view in perspective of a bag made out of the packaging material of the present invention, the bag being designed for an artillery shell;
Figure 5 is a view in perspective of the bag illustrated in Figure 4 installed on an artillery shell, but before shrinking of the bag;
Figure 6 is a view similar to Figure 5, but illustrating. the bag being shrunk around the artillery shell;
Figure 7 is a fragmentary cross sectional view illustrating the packaging material shrunk around the artillery shell;
Figure 8 is a view similar to Figure 6, but illustrating the manner in which the packaging material is removed from the product;
Figure 9 is a view in perspective of a vacuum packaging machine modified to perform a packaging method according to an embodiment of the present invention;
Figures 10 - 13 are views, partly in section, of the machine illustrated in Figure 9 and illustrating the various steps of the packaging method according to the alternate embodiment of the invention;
Figures 14 - 19 are views similar to Figures 9 - 13 respectively, but illustrating another embodiment of the invention;
Figure 20 is a view in perspective of an automobile which is to be covered by packaging material made pursuant to the present invention;
Figure 21 is a view similar to Figure 20, but illustrating a bag made out of the packaging material placed over the automobile, but before the bag is shrunk;
Figure 22 is a view similar to Figures 20 and 21, but illustrating a bag made out of the packaging material placed over the automobile, and after the bag is shrunk;
Figure 23 is a view of the bag of packaging material used to protect the automobile of Figures 20-23, but after the bag has been removed from the automobile;
Figure 24 is a plan view of a packaging machine similar to that used in the embodiment of Figures 9-13, but illustrating a step in an alternate method of the invention; and
Figure 25 is a view similar to Figure 9, but illustrating another method step of an alternate embodiment of the invention.

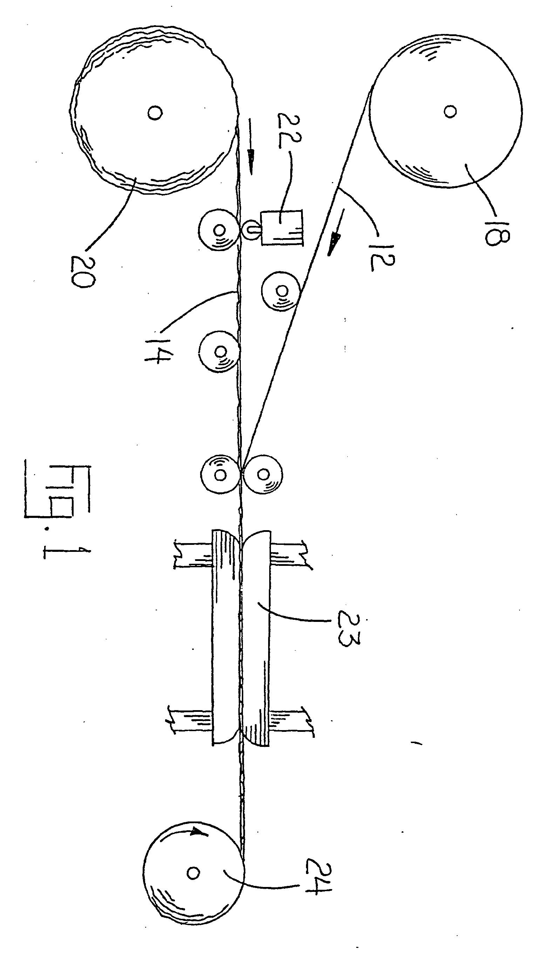

Referring now to Figures 1-8 of the drawings, a packaging material generally indicated by the numeral 10 made according to the present invention includes a first layer 12 consisting of a shrink film which has a predetermined shrink response in response to heat applied to the film and which hardens into a rigid shell when cooled after shrinking. The shell is sufficiently rigid that it maintains a substantially smooth outer shape conforming to the contours of the product and is shape retaining and self supporting when removed from the article. The rigid shell is both resilient in that it tends to return to its original shape after deflection and has a coefficient of friction that is sufficiently low that the impact of blows applied to the film tend to glance off. The shrink film 12 used for the shell is preferably a copolymer of polyethylene terephthalate (PET), such as polyethylene terephthalate glycol (PETG), available as Bonpet 3A from Bonset America Corporation. However, other copolymers of polyethylene terephthalate (PET), such as polyethylene terephthalate methanol or polyethylene terephthalate cycloheranedimethol, may be used. Film 12 may also be formed from isostatic polypropylene or syndotatic polypropylene, by way of non-limiting example. Copolymers of HDPE, PET or PETG may also be used. The film material is preferably shrinkable in both the longitudinal and transverse direction, such terms being well understood in the package processing art. More preferably, the film employed will be shrinkable in the transverse direction to a greater extent than it will be in the longitudinal direction, i.e., the film will have a shrink response in the longitudinal direction, which is less than the shrink response in the transverse direction. While the product of the present invention is shrinkable, it should be noted by those skilled in the art that the product may be useful prior to or in lieu of shrinking the same.

The second layer 14 is a nonwoven fabric comprising nonwoven, randomly arranged fibers of any well-known type, and may include both natural and man-made fibers, or combinations thereof, such as polyester, nylon 6,6 or a combination of wood pulp and polyester fibers. Typical fabrics are sold under the trademark Sontara by DuPont Corporation or as PBN-2 by Fabreweb North America Inc. It will be noted that the fibers forming the nonwoven fabric 14 cooperate to define voids 16. Accordingly, the upper and lower surfaces of the nonwoven fabric 14 tend to be irregular. As will hereinafter be explained, an adhesive is applied to raised portions of the nonwoven, so that when the film and nonwoven fabric are brought into contact with one another intermittent bonds are formed across the engaging surfaces of the film and nonwoven fabric to hold the material together. A typical adhesive is a pressure sensitive, rubber thermoplastic hot melt adhesive in the block copolymer family, such as an S-1-S (styrene-isoprene-styrene), SB-S (styrene-butylene-styrene), or S-EB-S (styrene-ethylene butyl-styrene) adhesive, by way of non-limiting example. Still other adhesives such as those based on ethyl vinyl acrylates and polyolefins, by way of non-limiting example, may by used. In any case, the adhesive is generally applied only to the raised portions of the nonwoven fabric 14, and does not wet through to any significant extent the remainder of the nonwoven, thus only the raised portions are bonded to the film to form the intermittent bonds. Accordingly, in choosing the appropriate adhesive, it is important that the adhesive be of a consistency that it does not wet through the nonwoven fabric.

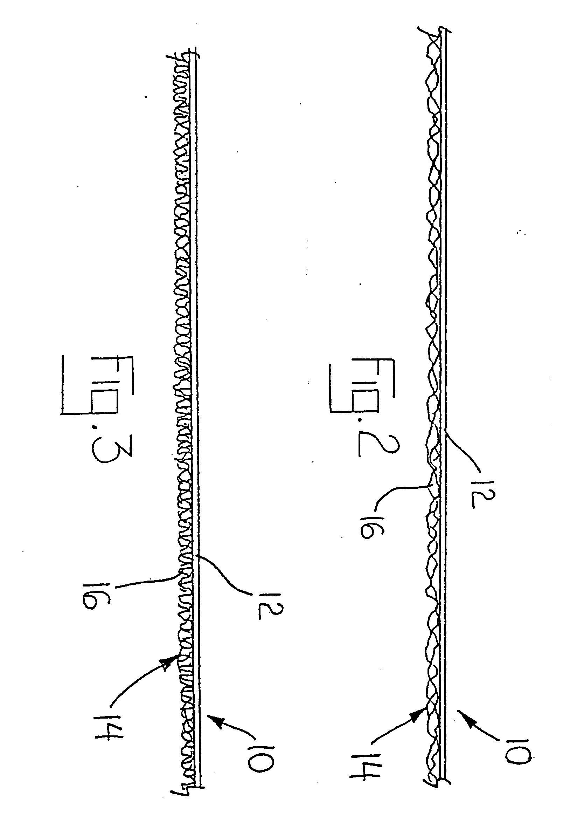

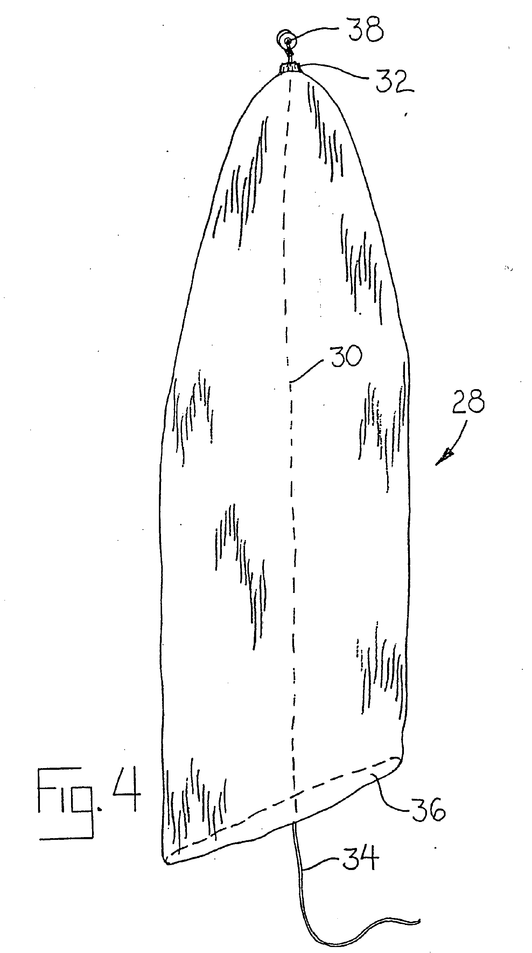

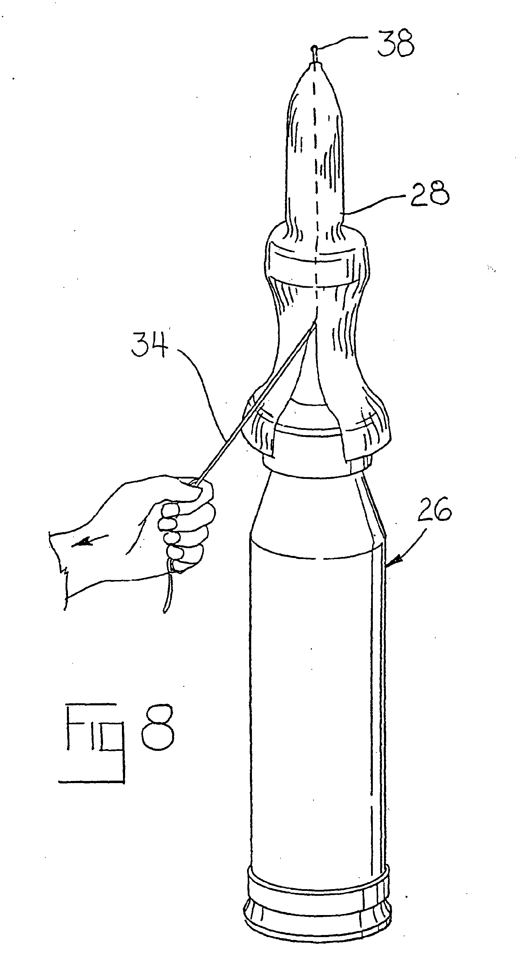

As can be seen in Figure 2, before shrinking the voids 16 between the fibers of the nonwoven fabric 14 are relatively large. Referring to Figure 6, the film layer has been shrunk to form the rigid shell 12a. However, the nonwoven fabric cannot shrink and thus "bunches up" to form much smaller voids after shrinking, as illustrated in Figure 3. Since the nonwoven fabric 14 is constrained between the film 12 and the product being protected, the fabric 14 will compact largely in a direction parallel to the film 12. Because of the aforementioned intermittent bonds, the areas of the fabric between the bonds are permitted to move relative to the film, thus allowing the voids 16 to become smaller. The nonwoven fabric 14 supports the film 12 off of the product being protected, and absorbs impact forces applied thereto and prevent scratching by the film. The nonwoven fabric 14 has a thickness permitting the shell formed after shrinking of the film to move laterally with respect to the product so that the nonwoven fabric also acts as a damper, permitting the film to move slightly relative to the product as impact blows glance off of the film.

Referring now to Figure 1, the packaging material 10 is preferably manufactured by feeding the film 12 from a roll 18 and the nonwoven fabric 14 is fed from a roll 20. Fabric 14 is fed through a gluing station 22 where the pressure sensitive adhesive is applied lightly to the upper surface of the fabric 14 as it is fed toward the bonding station 23. Bonding station 23 gradually reduces the distance between the fabric 14 and the film 12 as these materials are carried through the bonding station 23. The bonding station 23 is adjusted such that the film 12 is brought into touching engagement with the fabric 14 without substantial pressure being applied to either the film 12 or the fabric 14. As described above, since the adhesive is tacky, this touching of the film 12 against the nonwoven fabric 14 is all that is required to secure the film to the fabric, it being noted that the bonding will only take place across a relatively small percentage of the fabric 14 and film 12, since the adhesive is applied only to the raised portions of the fabric and does not wet through the fabric 14. After passing through the station 23, the material 10 is wound on a roll 24.

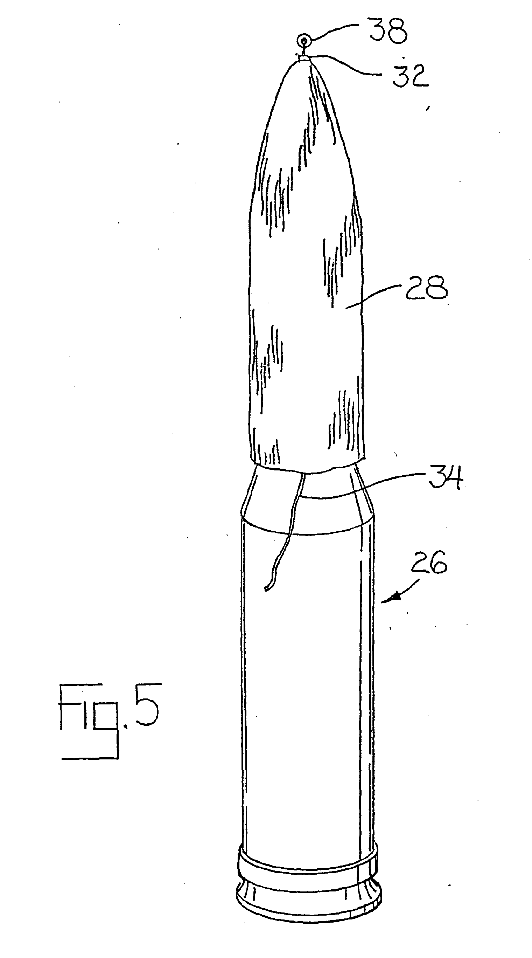

Referring now to Figures 4-8, the manner in which the invention may be used to protect a particular product, such as an artillery shell generally indicated by the numeral 26 will be described. Referring to Figure 4, a section of the material 10 is cut and formed into a generally conical bag as indicated by the numeral 28, with the film layer 12 defining the exterior surface of the bag and the nonwoven fabric 14 defining the inner surface of the bag. The edges of the material are pulled together to form the conical bag and heat sealed together to form a seam generally indicated by the numeral 30. A reinforcing grommet 32 may be secured to the apex of the bag and means for securing the bag generally in the form of a zipper, tape or pull cord 34 is provided. As shown, a cord is employed wherein the cord is threaded internally within the bag and through the grommet 32. The cord is of sufficient length that it extends out of the open end 36 of the bag 28. The end of the cord extending through the grommet 32 is tied to an annular member 38, which is of sufficient size that it cannot be pulled through the grommet 32. The cord 34 is made of a strong material, such as Kevlar, and has a relatively small diameter such that the cord will be surrounded by the nonwoven fabric and held away from the surface of the product by the nonwoven fabric.

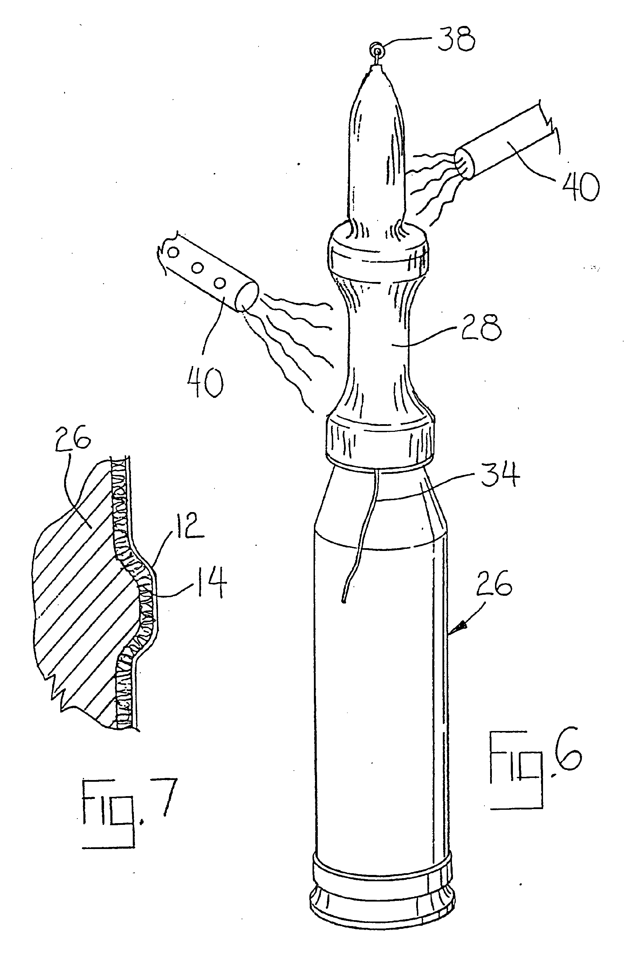

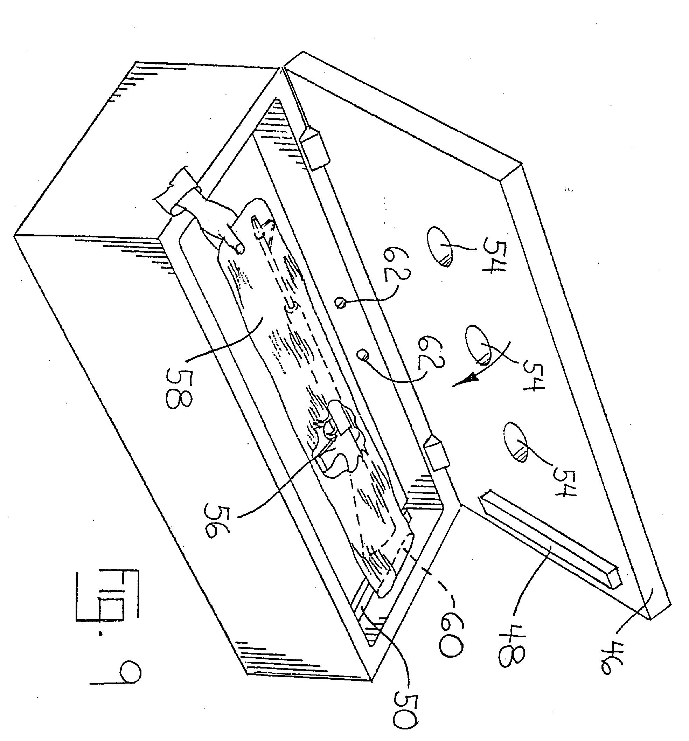

As shown in Figure 5, the bag 28 is preferably sized such that it will loosely fit over the end of the shell 26 which is to be protected, and the cord 34 is of sufficient length that a portion of the cord sufficient to be grasped extends out of the open end 36 after the bag 28 is applied over the shell 26. Heat is then applied, such as through the use of robotics or by manually holding conventional heat guns 40 sufficiently close to direct heated air on the bag 28. As indicated in Figure 7, shrinking continues until the material conforms to the contours of the shell 26. Upon cooling, the outer film 12 hardens into a rigid shell, and the nonwoven fabric 14 is compressed between the film 12 and the product 26. The film is held away from the surface of the product both during and after shrinking of the film by the nonwoven fabric 14, so that the film, which may be abrasive, cannot damage the surface of the product. The nonwoven fabric also provides cushioning so that impact forces applied to the outer shell during handling of the product after packaging are not transmitted to the surface of the product thereby preventing scratching. The shrinking of the film is sufficient to form a seal between the open end 36 of the bag 28 and the shell 26, thereby protecting the portion of the product covered by the packaging from corrosion due to atmospheric moisture. When the shell 26 is to be used, the packaging can easily be removed by pulling on the cord 34, as shown in Figure 8, to thereby sever the outer shell and permit the packaging to be removed.

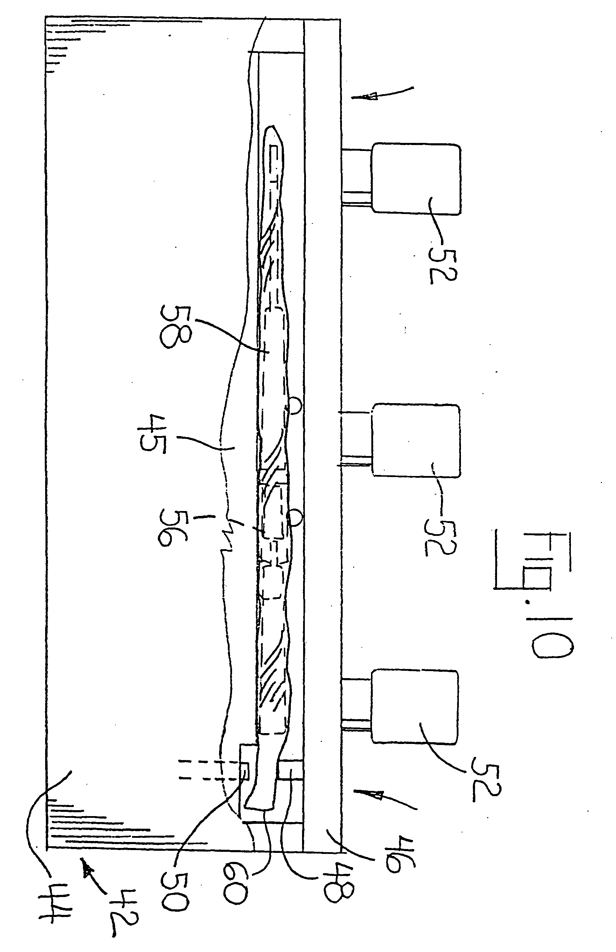

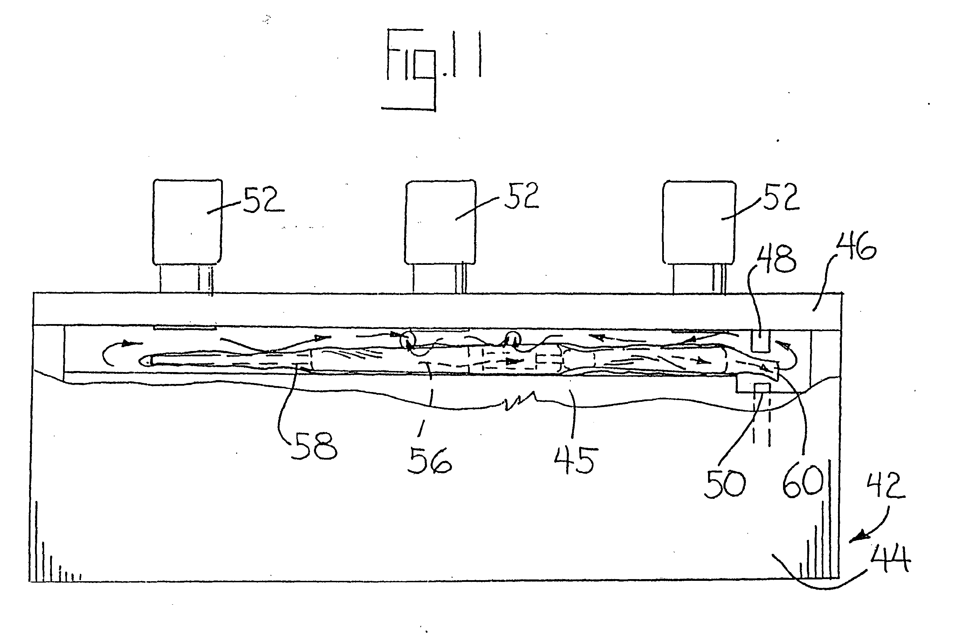

Referring now to Figures 9 - 13, the present invention may also be used to protect product in which existing moisture must be removed from the product in order to prevent corrosion. A single chamber vacuum packaging machine, such as the Dixie Vac 2000 available from Dixie Union GmbH of Germany, or from Koch Supplies, Inc. of Kansas City, MO, or from Robert Reiser & Co., of Canton, Maine is generally indicated by the numeral 42. Vacuum packaging machine 42 includes a housing 44 defining a vacuum chamber 45, which is closed and sealed by a lid 46 which is hinged to the housing 44. A pair of cooperating heat sealing bars are provided, one of which is indicated at 48 and is mounted on the lid 46 opposite the other sealing bar 50 which is mounted within the chamber 45 on an actuator (not shown), which permits the bar 50 to be moved toward and away from the sealing bar 48. Conventional heat guns generally indicated by the numerals 52 are mounted on the side of the lid 46 opposite to the side facing into the chamber 45 when the lid is closed. Heated air provided by the heat guns 52 is communicated into the chamber 45 through openings 54, which may be closed by a mechanism (not shown) when the guns 52 are not being used. While the vacuum may be applied either before or after the product is heated, in general the vacuum is applied prior to heating.

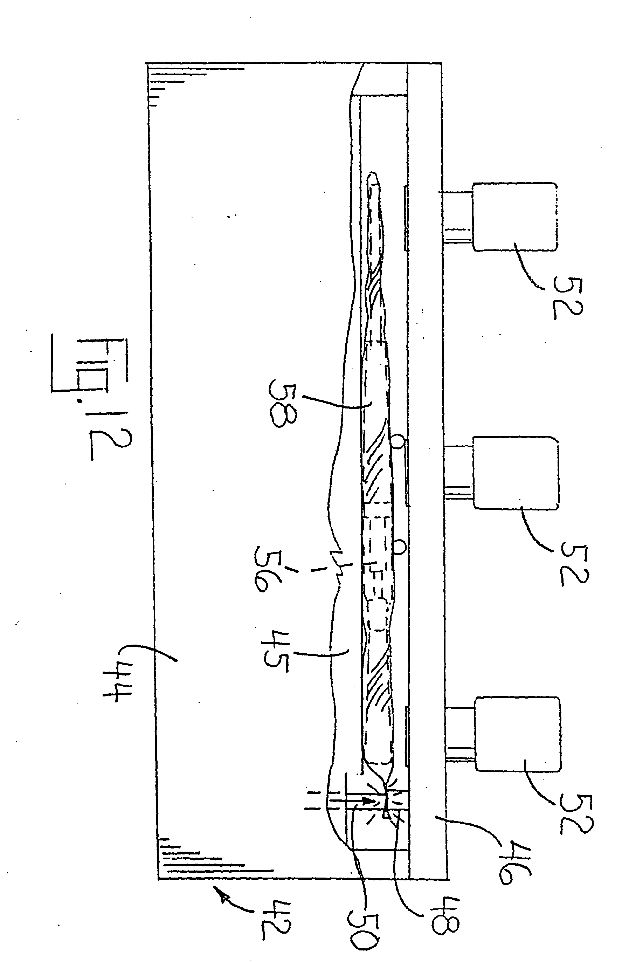

According to the invention, a product, such as a rifle generally indicated at 56 is placed in a bag 58, which is similar to the bag 28 but designed to wholly receive the rifle 56 within the bag 58. The bag 58 with the rifle 56 installed therein is placed within the chamber 45, with the open end 60 of the bag 58 (through which the rifle 56 was installed into the bag) resting between the sealing bar 50 and the end of the chamber 45. The lid 46 is then closed and locked to provide an air tight seal for the chamber 45. Air is then evacuated from the chamber 45 through ports 62. While this occurs, the sealing bar 50 remains in its lowered position displaced from the sealing bar 48, so that evacuation of the chamber 48 also evacuates the bag 58 through the open end 60 (see Figure 11). If necessary, an air tube (not shown) may be used to inject dry air or another gas such as a vapor corrosion inhibitor into the bag 58 through the open end 60 to facilitate removal of moisture from the bag and to optionally coat the product before the bag is evacuated.

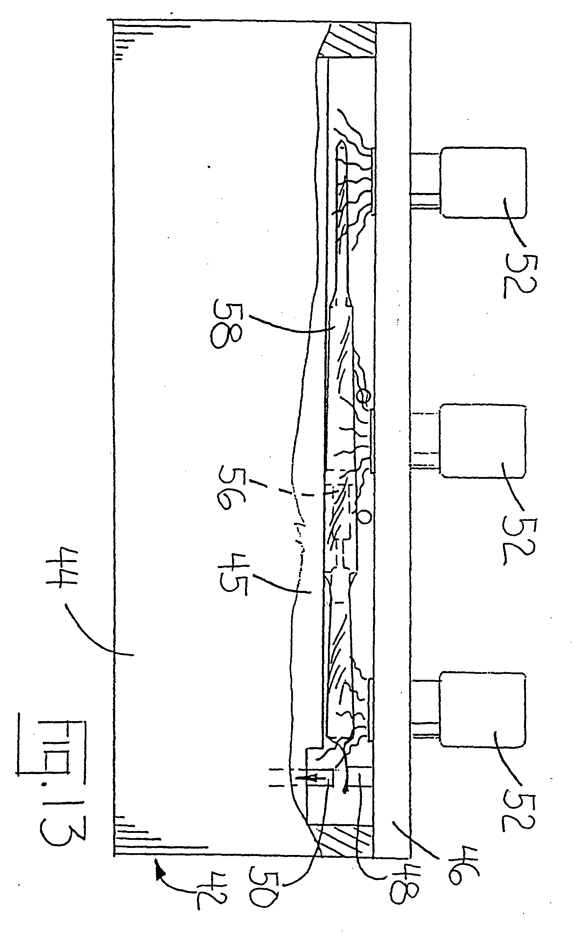

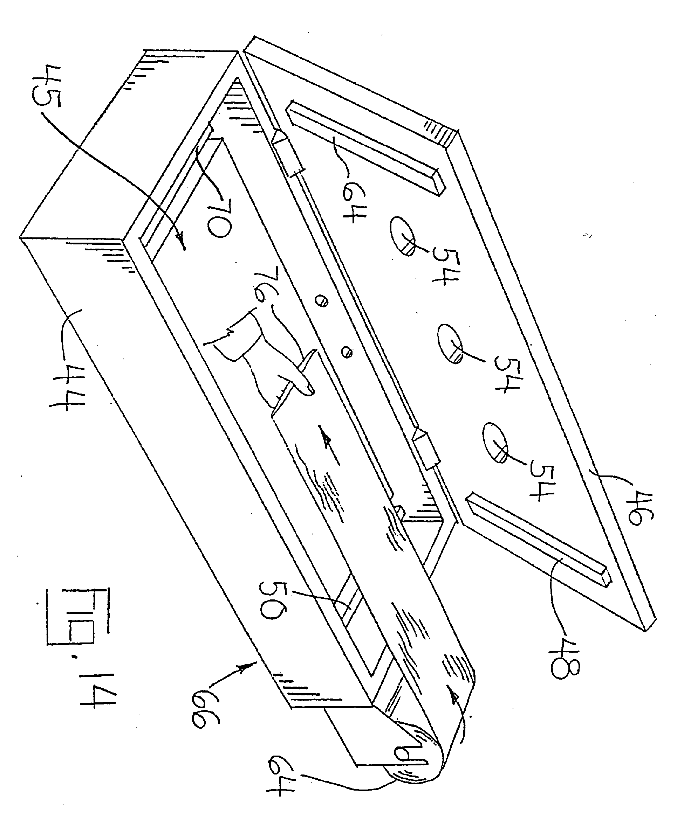

After the bag is evacuated, sealing bar 50 is advanced toward the sealing bar 48 to clamp the open end of the bag 58 between the sealing bars 48, 50 (Figure 12). The sealing bars 48, 50 are then energized to seal shut the open end 60 of the bag, after which the sealing bar 50 is withdrawn (Figure 13). The heat guns 52 are then activated to shrink the film 12 to form a rigid shell as described above conforming substantially to the contours of the product. Accordingly, the product is sealed within an air tight bag from which moisture has been removed. The product can then be stored indefinitely while being protected against impact forces applied to the shell during handling due to the nonwoven fabric separating the shell from the product.

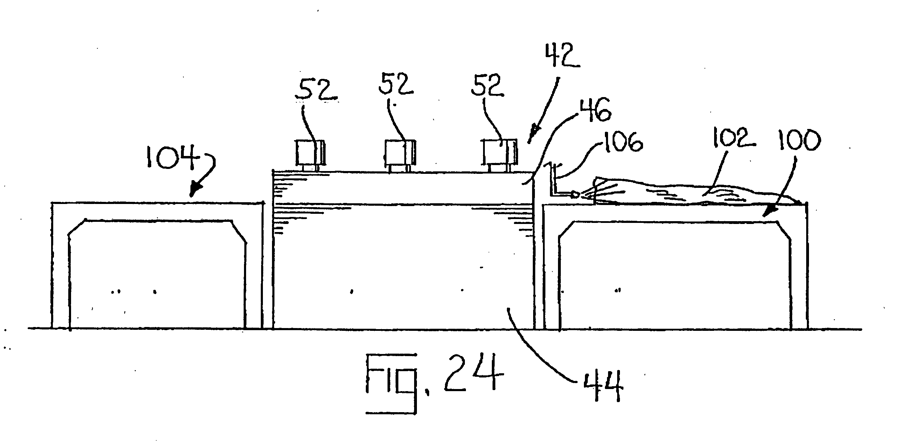

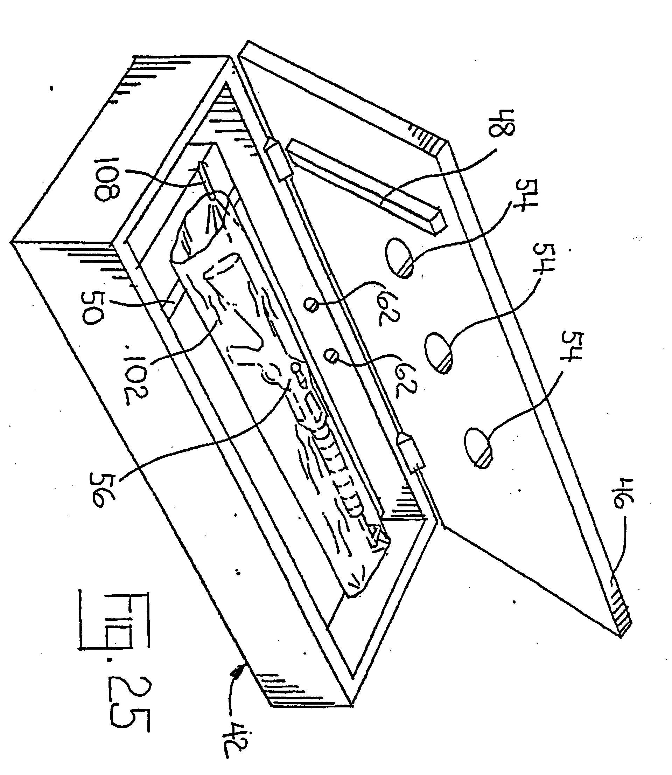

Referring now to figures 24 and 25, a modification of the method illustrated in Figures 9-13 is disclosed in which moisture is removed from the bag before the bag is sealed, thus protecting the product against moisture damage during storage. Referring to Figure 24, a table 100 is placed next to the packaging machine 42 to support a bag 102 (one end of which having already been sealed) before the product is inserted therein. A second table is also placed adjacent the machine 42 to support the packaged product upon removal from the machine. As illustrated in Figure 24, the bag 102 is placed on the table 100 and the bag is inflated by injecting warm, dry compressed air into the bag 102 through a nozzle 106 before the product is placed in the bag. The air is preferably dried by using a conventional air dryer. The temperature of the air must be less than the temperature at which the shrink film begins to shrink. The optimum temperature of the air is generally about 55-85 degrees C, and is forced into the bag at 20-50 cfms. Inflating the bag facilitates placing of the object within the bag while reducing the possibility of tearing or damaging of the bag, and the warm air removes moisture from the interior surfaces of the bag, thus reducing the relative humidity. By inflating the bag with warmed air before the product is inserted into the bag, moisture that would otherwise be on the interior surface of the bag is not trapped by the product. After the bag is inflated and deflated, the product is placed in the bag and transferred into the packaging machine illustrated in Figure 25.

The bag with the product installed therein is then transferred into the packaging machine 42 as indicated in Figure 25. Before the lid 46 is closed, the bag is again inflated using air warmed and dried as discussed above at the temperature described above by injecting air into the bag through nozzle 108. Accordingly, moisture is removed from the environmental cavity of the bag and the surface of the product. Because a rise in temperature caused by the heated air lowers the humidity and since the humidity of the heated air injected through the nozzle is close to zero, the product is stored in an environment that contains very little moisture. Accordingly, the product is protected against moisture damage. Conventional humidity indicating strips may be placed in or otherwise integrated into a wall of the bag where they are visible from outside of the bag to make evident any change of moisture within the sealed bag. After the bag has been inflated and deflated, lid 46 is closed and the bag is evacuated, sealed and the film shrunk as described above with respect to Figures 9-13. In some cases, however, shrinking may not be required to adequately protect the product, and thus a nonshrinkable film may be used and the step of shrinking the film may be eliminated.

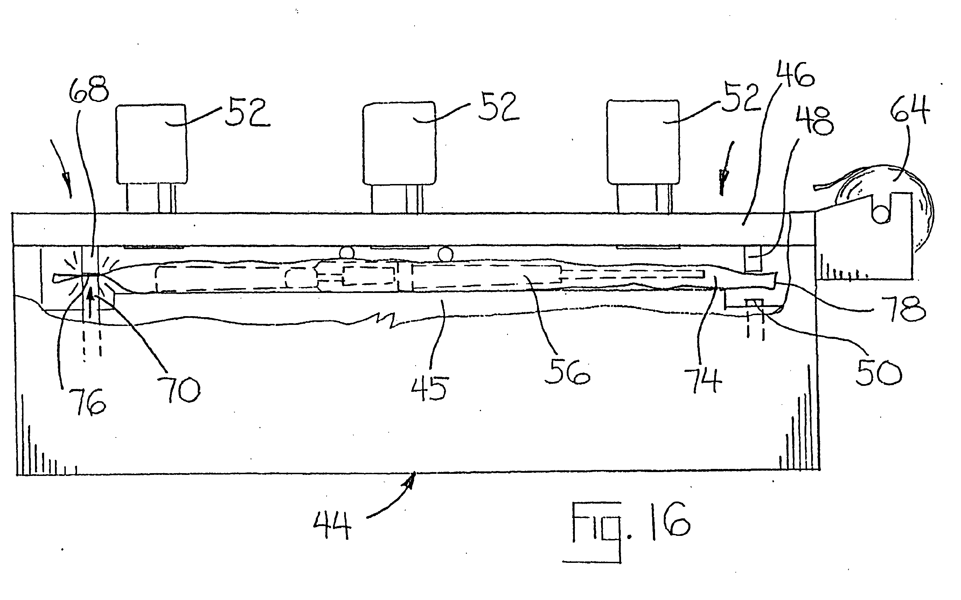

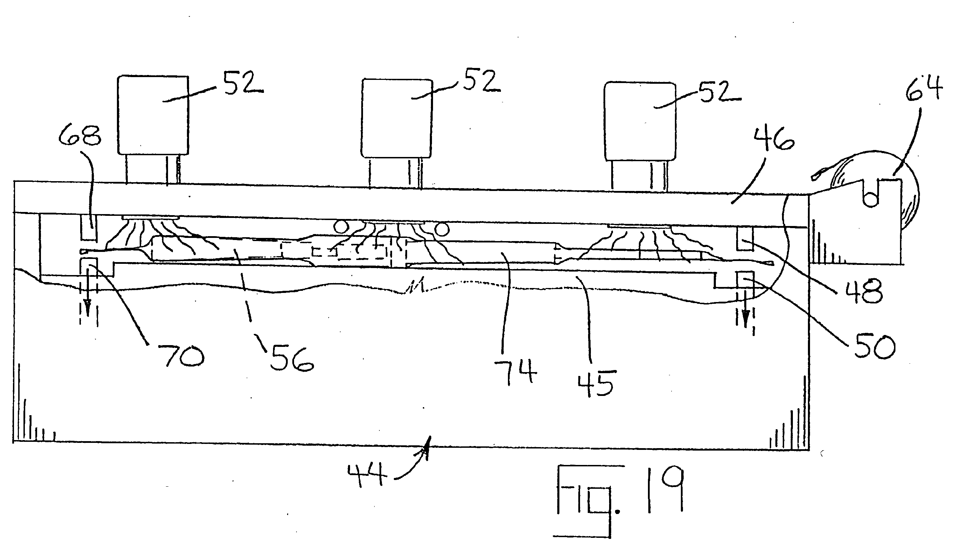

Another embodiment of the present invention is disclosed in Figures 14-19, in which elements the same or similar to corresponding elements of the other embodiments retain the same reference numeral. In Figures 14-19, a roll of tube stock 64 is mounted on one end of a vacuum packaging machine 66. The tube stock is high molecular weight, high density polyethylene, available from Equastar, Inc. of Cincinnati, Ohio. The tube stock is a shrink film and is suitable for applications where surface abrasions are not a factor, since the nonwoven fabric is not provided. The machine 66 is similar to the machine 42, except that the machine 66 is provided with a second pair of sealing bars 68, 70 which are mounted adjacent the end of the machine 66 opposite the end near which the sealing bars 48, 50 are mounted. The sealing bars, 68, 70 are identical to the sealing bars 48, 50 and operate in the same way.

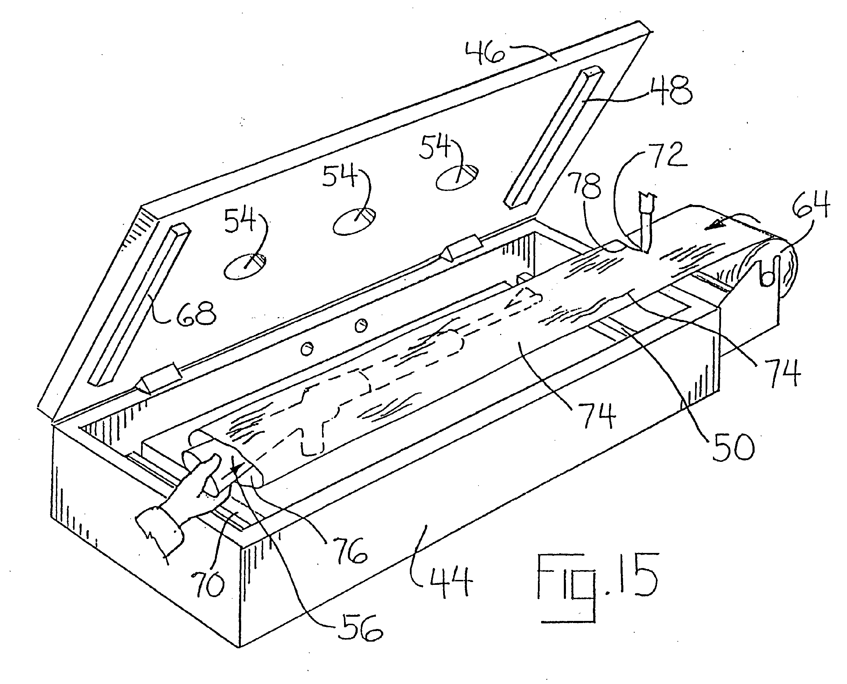

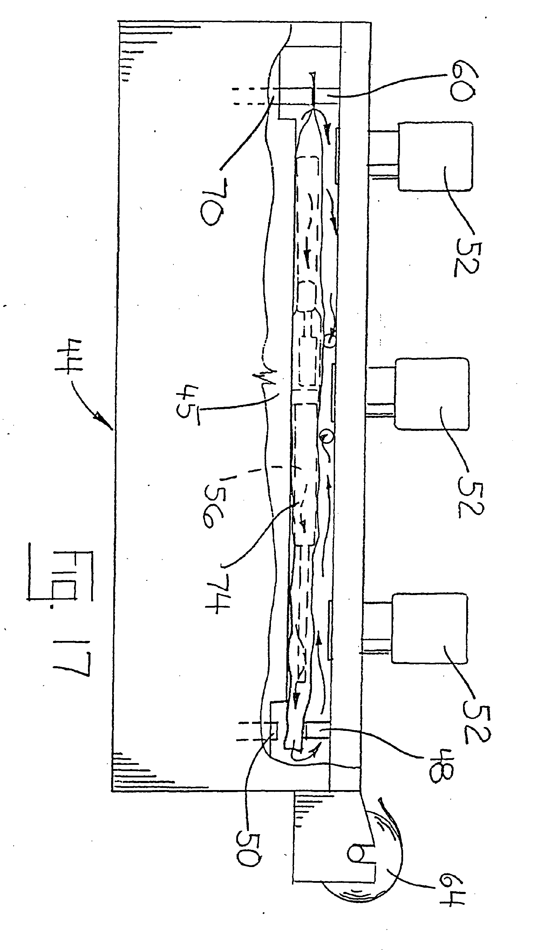

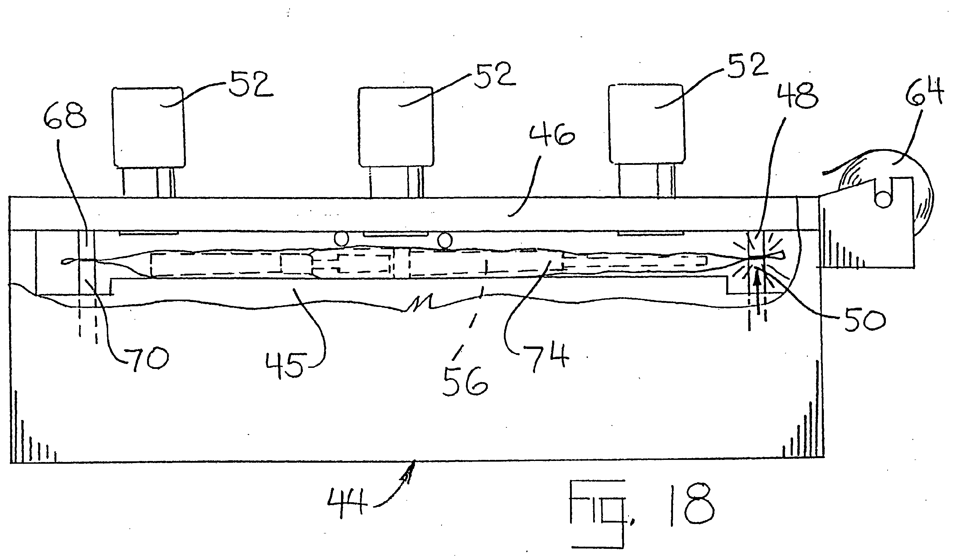

Referring to Figure 14, a length of the tube stock is either automatically fed into the chamber 45 or, as demonstrated, is manually pulled across the chamber 45 and a section 74 is severed as indicated at 72. The length of the section 74 must be sufficiently long to extend across both sets of sealing bars 48, 50 and 68, 70. Of course, both ends of the section 74 will be open ends 76, 78. The product to be protected, such as the rifle 56, is then inserted through one of the open ends into the section 74 of the tube stock such that the rifle 56 is disposed entirely within the section 74 (Figure 15). The lid 46 is then closed and the sealing bars 68, 70 are operated to seal the open end 76 shut, while leaving the end 78 open. The chamber 45 is then evacuated to thereby also evacuate the section 74, as disclosed above with respect to the embodiment of Figures 9-13 and is illustrated in Figure 17. The sealing bars 48, 50 are then operated to seal the open end 78 (Figure 18). The heat guns 40 are then operated to shrink the section 74 after which the lid 46 is opened and the rifle 56 sealed within the section 74 is removed and stored.

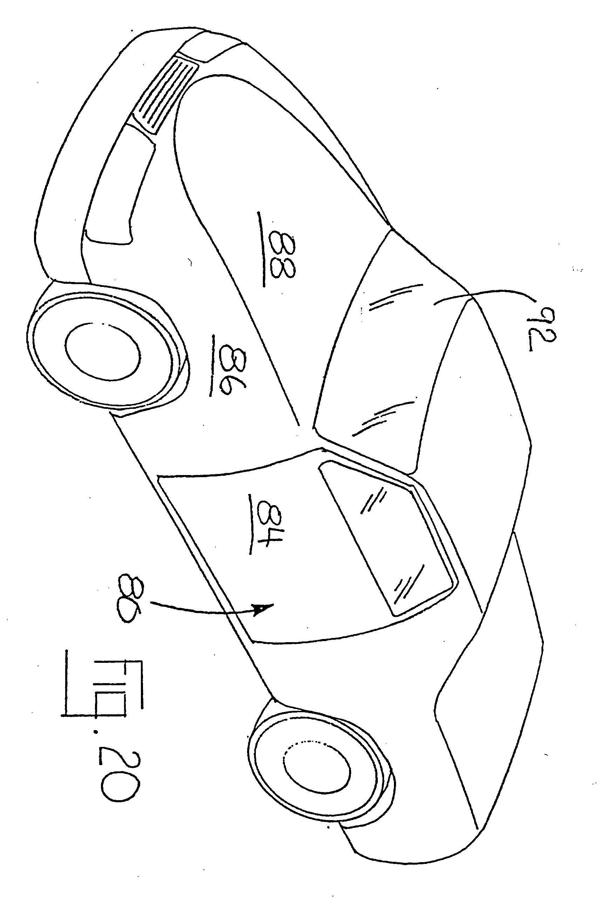

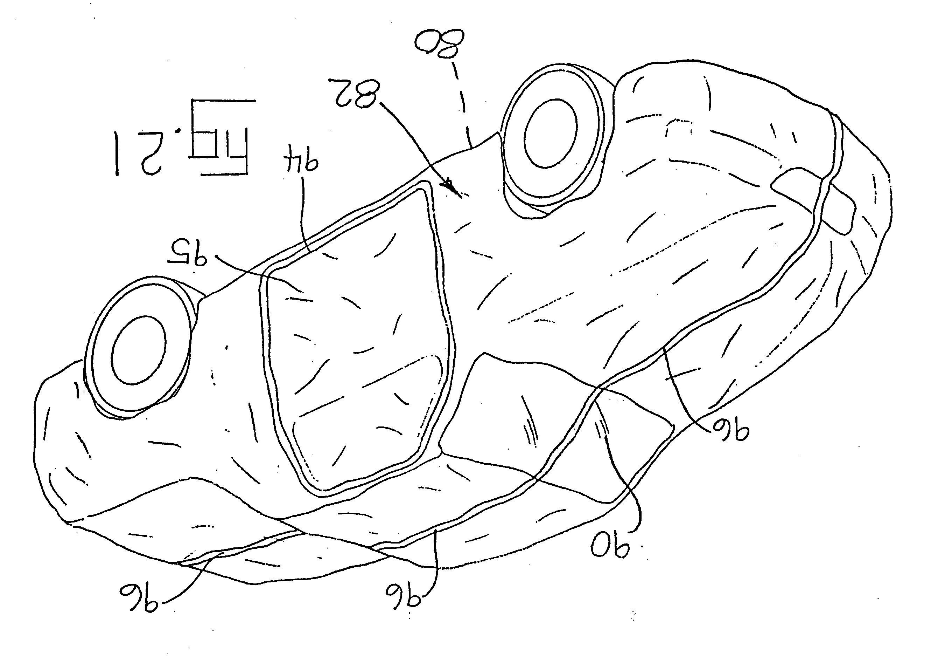

Referring now to Figures 20-23, the packaging material of the present invention may also be used to protect an automobile during transport and shipment, such as the automobile indicated generally at 80. A bag 82 of packaging material is placed over the vehicle, as indicated in Figure 21. The bag 82 is made by cutting out panels corresponding to the various body panels of the vehicle 80, such as the door 84, front fender panel 86, hood 88, etc. Desirably, a panel of clear plastic 90 (which is not shrunk) is disposed over the windshield 92. The panels are joined together by sewing, heat sealing, or any other way well known to those skilled in the art. Preferably, the panel 95 covering the left front door is secured to the rest of the bag 82 by a first zipper 94, so that the vehicle may be entered and driven after the bag is installed on the vehicle and shrunk. The amount of shrinkage is relatively small, and does not prevent operation of the zipper 94 or prevent the windshield from aligning with the clear plastic panel 90. A second zipper 96 may be installed along the centerline of the vehicle.

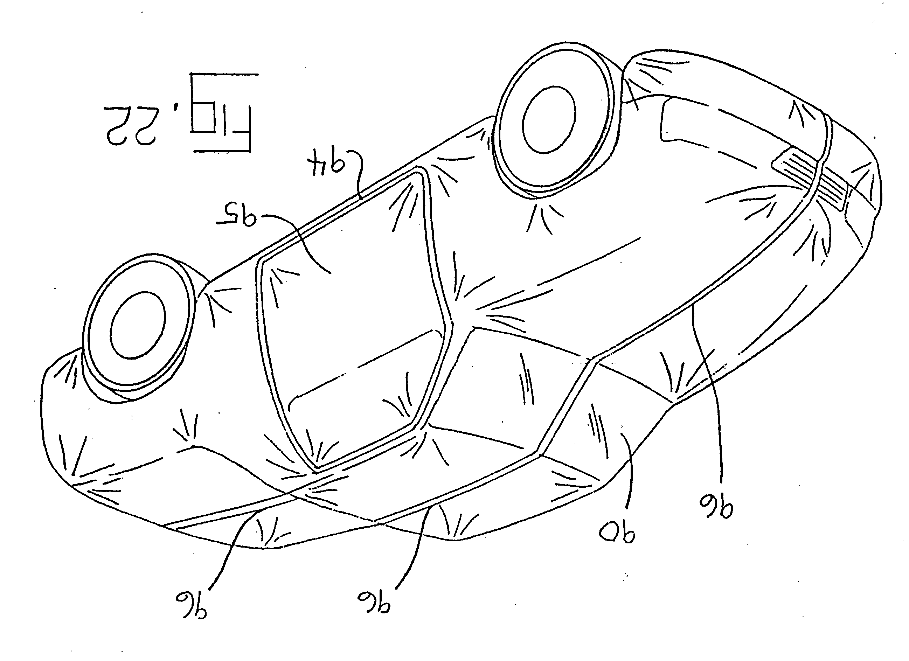

After the bag 82 is installed over the vehicle, the bag is shrunk by using heat from any conventional source, such as heat guns, passing the vehicle through a heat tunnel etc. As seen in Figure 22, after shrinking, the bag closely conforms to the contours of the automobile 80. The outer film, as discussed above, is sufficiently rigid after shrinking to form a shape retaining, self supporting outer shell, which is held away from the painted surfaces of the automobile 80 by the nonwoven layer, which compacts as the film is shrunk to support the shell off of the surface of the automobile. Although the shell is sufficiently rigid to be self supporting and shape retaining, the shell will deflect when struck or impacted by a hurled object (such as a stone). The compacted nonwoven fabric cushions such blows, thereby preventing damage to the surface.

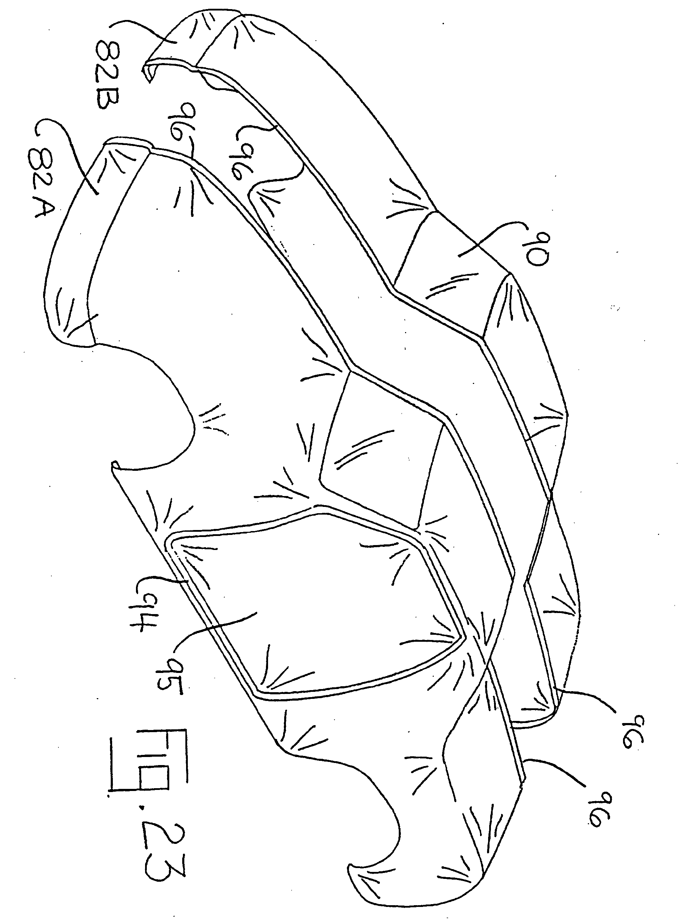

The bag may be removed from the vehicle by operating the zipper 96 to separate the two halves of the bag, thereby permitting removal from the automobile. As can be seen in Figure 23, after removal from the vehicle, the two halves 82a, 82b of the bag 82 retain their shape retaining and self supporting characteristics. However, the outer shell is sufficiently thin that the two halves of the bag are easily crushable, so that the bag may be crushed and compacted to be transported to a recycling center.

While it will be apparent that the preferred embodiments of the invention disclosed are well calculated to fulfill the objects stated, it will be appreciated that the invention is susceptible to modification, variation and change without departing from the spirit thereof.

## Claims

1. Packaging for a product comprising a first layer of a flexible, shrinkable film and a second layer of a nonwoven fabric secured to said film for engaging the product and maintaining the film away from the product, said film being responsive to heat to shrink into a rigid shell substantially conforming to the shape of the product, said nonwoven fabric supporting the shell off of the product during and after shrinking of the film and absorbing impact forces applied to the shell to thereby protect the product from said impact forces.

2. Packaging as claimed in Claim 1, wherein said inner layer is adhesively bonded to said film such that at least portions of said nonwoven were able to move relative to the film.

3. Packaging as claimed in Claim 2, wherein the said adhesive bonds are intermittently distributed between the film and the nonwoven to thereby form intermittent bonds between the film and the nonwoven.

4. Packaging as claimed in Claim 2, wherein the film is shrinkable in both longitudinal and transverse directions, said film having a shrink response in the longitudinal direction which is less than the shrink response in the transverse direction.

5. Packaging as claimed in Claim 2, wherein said film is made of a copolymer of polyethylene terephthalate.

6. Packaging as claimed in Claim 1, wherein said shell includes means for severing said shell to permit removal of the packaging from the product.

7. Packaging as claimed in Claim 6, wherein said means for severing said shell include at least one of a zipper tape or pull cord.

8. A material for packaging product comprising a film having a predetermined shrink response in response to heat applied to the film, said film forming a shell upon shrinking in response to heat applied to the film, and a nonwoven fabric intermittently bonded to the film to permit the film and the nonwoven to move relative to one another as the film is shrunk.

9. Material as claimed in Claim 8, wherein said intermittent bonds are formed by an adhesive applied intermittently between the film and the nonwoven fabric.

10. Material as claimed in Claim 9, wherein said film is shrinkable in both longitudinal and transverse directions, said film having a shrink response in the longitudinal direction which is less than the shrink response in the transverse direction.

11. Material as claimed in Claim 10, wherein said film is made of a copolymer of polyethylene terephthalate.

12. Material as claimed in Claim 8, wherein said shell is sufficiently rigid to maintain a substantially smooth shape conforming to the contours of the product and is shape retaining and self supporting when removed from the product, said shell having a coefficient of friction sufficiently low to permit the shell to deflect blows applied to the material.

13. Material as claimed in Claim 12, wherein said nonwoven fabric is of a thickness sufficient to permit the shell to deflect laterally with respect to said product in response to impact forces applied to the shell.

14. Material as claimed in Claim 8, wherein said shell includes means for selectively severing said shell, said means including at least one of a zipper, tape or pull cord.

15. Method of packaging a product comprising the steps of providing a packaging material having a film layer and a nonwoven fabric layer intermittently bonded to the film layer, said film layer being a shrinkable film having a predetermined shrink response in response to heat applied to the film, forming said material into a bag roughly conforming to at least the portion of the product to be protected, installing the product within the bag, and shrinking said material until the film forms a shell conforming to the product.

16. Method of packaging a product as claimed in Claim 15, wherein the inner surface of the bag is defined by said nonwoven fabric and the outer surface is defined by said film,

17. Method of packaging a product as claimed in Claim 15, wherein said bag is evacuated before shrinking the film.

18. Method of packaging a product as claimed in Claim 15, wherein said bag is evacuated and then sealed before shrinking the film.

19. Method of packaging a product as claimed in Claim 15, wherein said method includes the steps of placing the bag with the product installed therein in a chamber of a vacuum packaging machine, said machine having opposed sealing bars movable relative to each other, evacuating the bag, and then operating the sealing bars to seal the bag after evacuation thereof.

20. Method of packaging a product as claimed in Claim 19, wherein said method includes the step of inflating said bag before installing the product therein with air warmed to a temperature sufficient to reduce substantially the moisture level within the bag.

21. Method of packaging a product as claimed in Claim 20, wherein said bag is inflated before being evacuated and sealed.

22. Method of packaging a product as claimed in Claim 19, wherein said step of shrinking said bag is effected by initiating operation of heat guns mounted on said vacuum packaging machine and having outlets communicating to said chamber.

23. Method of packaging a product as claimed in Claim 19, wherein said bag is inflated before being evacuated and sealed.

24. Method of packaging a product as claimed in Claim 15, wherein said method includes the step of inflating said bag before installing the product therein with air warmed to a temperature sufficient to reduce substantially the moisture level within the bag.

25. Method of packaging a product comprising the steps of providing a vacuum packaging machine having a vacuum chamber therewithin, placing the product to be packaged in a bag made of a shrink film having a predetermined shrink response when heat is applied thereto and which forms a shell upon shrinking, evacuating said bag by drawing at least a partial vacuum in said chamber, sealing the product within the bag after the bag is evacuated, applying heat to the bag to shrink the bag into a shell conforming to the contours of the product to be protected, and removing the bag with the product therein from the vacuum packaging machine.

26. Method of packaging a product as claimed in Claim 25, wherein the film is supplied as a roll of tube stock defining a tube, unrolling a section of said tube stock in said chamber, cutting a length of said tube stock in which the product is to be packaged, installing the product in the tube, sealing one end of the tube to form said bag, and then sealing the other end of the bag after the bag is evacuated and before shrinking of the film.

27. Method of packaging a product as claimed in Claim 25, wherein a nonwoven fabric is intermittently bonded to the film, said nonwoven fabric defining the inner surface of the bag and engaging said product.

28. Method of packaging a product comprising the steps of providing a vacuum packaging machine having a vacuum chamber therewithin, providing a bag made of a film, inflating said bag before installing the product therein with air warmed to a temperature sufficient to reduce substantially the moisture level within the bag, placing the product to be packaged in the bag, inflating said bag again after the product is installed therein with air warmed to a temperature sufficient to reduce substantially the moisture level within the bag, sealing the product within the bag, applying heat to the bag to shrink the bag and removing the bag with the product therein from the vacuum packaging machine.

29. Method of packaging a product as claimed in Claim 28, wherein said method includes the step of evacuating said bag by drawing at least a partial vacuum in said chamber after the bag has been inflated with the product in the bag.

30. Method of packaging a product as claimed in Claim 28, wherein said material includes a nonwoven fabric intermittently bonded to the film.

31. Method of packaging a product as claimed in Claim 28, including the step of installing humidity responsive indicating strips within the bag to indicate if the relative humidity within the bag exceeds a predetermined level.

32. Method of packaging a product as claimed in Claim 28, wherein said film is a shrink film having a predetermined shrink response in response to heat applied thereto, said method including the step of applying heat to the film to shrink the latter after the bag is evacuated.
